# EUROPÄISCHE PATENTSCHRIFT

(11) **EP 1 010 589 B1**
(45) Veröffentlichungstag und Bekanntmachung des Hinweises auf die Patenterteilung: **30.06.2004**
(21) Anmeldenummer: 99122266.2
(22) Anmeldetag: 08.11.1999
(51) Int. Cl.: B60R 21/20

(54) **Luftsackmodul für Kraftfahrzeuge**
Airbag module for vehicles
Module de coussin de sécurité pour véhicules

(30) Priorität: 18.12.1998 DE 19858691
(43) Veröffentlichungstag der Anmeldung: 21.06.2000
(73) Patentinhaber: Delphi Technologies, Inc., Troy, MI 48007-5052 (US)
(72) Erfinder: Dancasius, Michael, 42105 Wuppertal (DE); Guthke, Detlev W., 58089 Hagen (DE); Standinger, Richard J., 73579 Schechingen (DE); Ueberhorst, Arnd K. H., 45549 Sprockhövel (DE)
(74) Vertreter: Manitz, Finsterwald & Partner GbR

(56) Entgegenhaltungen:
- DE-U- 29 805 207
- DE-U- 29 816 923
- DE-U- 29 902 033
- US-A- 5 024 464
- US-A- 5 826 901

## Beschreibung

Die Erfindung betrifft ein Luftsackmodul für Kraftfahrzeuge mit einem Gehäuse für einen aufblasbaren Luftsack und einem Gasgenerator gemäß dem Oberbegriff des Anspruchs 1.

Derartige Luftsackmodule dienen dazu, den Luftsack im zusammengefalteten Zustand aufzunehmen und im Crashfall mittels des Gasgenerators aufzublasen. Die Luftsackmodule werden als eine Einheit in das Fahrzeug eingebaut. Dabei kann es zu Konflikten mit anderen Funktionseinheiten des Kraftfahrzeuges kommen, die bisher an den Stellen angeordnet wurden, an denen nunmehr Luftsackmodule vorgesehen werden, um einen optimalen Schutz für die Fahrzeuginsassen zu bieten. Beispielsweise bei im zentralen Bereich des Lenkrades unterzubringenden Fahrerairbags muß für eine optimale Funktionsfähigkeit sowohl des Airbagsystems als auch des Hupsystems des Fahrzeugs gesorgt werden, wenn dieses ebenfalls im zentralen Bereich des Lenkrades vorgesehen werden soll. Des weiteren können Probleme auftreten, wenn während des Betriebs des Fahrzeugs auftretende Schwingungen auf das Luftsackmodul übertragen werden und das Luftsackmodul derart in das Fahrzeug integriert ist, daß ihm neben der Schutzfunktion weitere Aufgaben zugedacht sind. Derartige Zusatzfunktionen können durch Schwingungen des Luftsackmoduls beeinträchtigt werden.

DE 298 169 23 U1 beschreibt ein fest mit dem Lenkrad verbundenes Airbagmodul, dessen Gasgenerator als Schwingungstilger dient und dazu in eineim elastisch verformbaren Element im Airbagmodul gelagert ist. Bei dem aus DE 298 052 07 U1 bekannten Lenkrad ist zur beweglichen Befestigung eines Airbagmoduls im Lenkrad eine Mehrzahl von sich parallel zur Lenkradachse erstreckenden Montagebolzen vorgesehen.

Es ist das der Erfindung zugrundeliegende Problem (Aufgabe), ein Luftsackrnodul der eingangs genannten Art zu schaffen, das möglichst einfach aufgebaut ist, nicht durch auftretende Schwingungen beeinträchtigt wird und insbesondere als in eine Lenkradeinheit integrierbarer Fahrerairbag verwendbar ist.

Die Lösung dieser Aufgabe erfolgt erfindungsgemäß durch die Merkmale des Anspruchs 1.

Erfindungsgemäß bilden das Gehäuse und der Gasgenerator keine starr miteinander verbundene Einheit. Diese Entkoppelung von Gasgenerator und Gehäuse ermöglicht es, das erfindungsgemäße Luftsackmodul derart im Kraftfahrzeug zu montieren, daß auftretende Schwingungen gezielt von einer bestimmten Baugruppe des Luftsackmoduls, beispielsweise von dem Gehäuse, ferngehalten werden. Des weiteren erfolgt durch die Erfindung eine Aufteilung der Gesamtmasse des Luftsackmoduls auf das Gehäuse und den Luftsack einerseits und auf den Gasgenerator andererseits. Die jeweiligen Massen sowie die jeweilige Art der Koppelung mit dem Lenkradsystem können durch die Erfindung gezielt auf Zusatzfunktionen abgestimmt werden, die dem Gehäuse und/oder dem Gasgenerator im einge-. bauten Zustand übertragen werden sollen.

Gemäß der Erfindung ist ferner der Gasgenerator mit einem Basiselement verbunden, das am Kraftfahrzeug, beispielsweise an einer Lenkradeinheit, befestigbar ist. Die Befestigung erfalgt beispielsweise durch Verrasten.

Hierdurch kann der Gasgenerator mit der Lenkradeinheit verbunden werden, während das Gehäuse relativ zur Lenkradeinheit bewegbar ist. Das Gehäuse kann als der zum Betätigen der Fahrzeughupe zu bewegende Teil des Hupsystems vorgesehen werden, wobei aufgrund des erfindungsgemäßen Abtrennens des Gasgenerators von dem Gehäuse dessen Gewicht erheblich reduziert ist. Eine eventuell vorgesehene federnde Lagerung des Gehäuses am Basiselement, die vergleichsweise steif ausgeführt sein muß, um ein unbeabsichtigtes Betätigen der Fahrzeughupe durch auf das Gehäuse übertragene Schwingungen zu vermeiden, kann derart ausgelegt werden, daß nur ein vergleichsweise geringer Kraftaufwand zum Betätigen der Fahrzeughupe erforderlich ist. Die reduzierte Masse des zu bewegenden Teils des Luftsackmoduls gestattet es somit, die erforderliche Betätigungskraft zu reduzieren, ohne gleichzeitig die Gefahr unbeabsichtigter Betätigungen der Fahrzeughupe zu erhöhen.

Das erfindungsgemäße Luftsackmodul eignet sich somit besonders gut dazu, als Bestandteil eines kombinierten Airbag- und Hupsystems eingesetzt zu werden.

Gemäß einem weiteren bevorzugten Ausführungsbeispiel der Erfindung dient der Gasgenerator als Schwingungsdämpfer.

Während des Betriebs des Fahrzeugs beispielsweise auf die Lenkradeinheit übertragene Schwingungen können durch geeignete Ausführung der Verbindung zwischen dem Gasgenerator und der Lenkradeinheit, die zur Übertragung von typischerweise auftretenden Schwingungen ausgebildet ist, durch die Masse des Gasgenerators gedämpft werden. Die im Vergleich zur Gesamtmasse des Luftsackmoduls große Masse des Gasgenerators wird somit als Dämpfungsmasse genutzt. Eine Übertragung der Schwingungen auf das Gehäuse des Luftsackmoduls wird erfindungsgemäß daher vermieden. Eine eventuell dem Gehäuse zugedachte Zusatzfunktion, beispielsweise die Ausbildung als Teil der Betätigungseinheit einer Fahrzeughupe, wird daher durch während des Betriebs des Fahrzeugs auftretende Schwingungen nicht beeinträchtigt. Dies wiederum vereinfacht die Ausführung einer Lagerung des Gehäuses an der Lenkradeinheit.

Gemäß einem weiteren bevorzugten Ausführungsbeispiel der Erfindung ist wenigstens eine Wand des Gehäuses als Gaseinlaß ausgebildet, wobei der Gasgenerator zumindest bereichsweise von der als Gaseinlaß ausgebildeten Gehäusewand umgeben ist.

Hierdurch kann eine kompakte Gesamtanordnung erzielt werden.

Gemäß einem weiteren bevorzugten Ausführungsbeispiel der Erfindung begrenzen der Gasgenerator, eine als Gaseinlaß ausgebildete Wand des Gehäuses sowie wenigstens ein Abdichtelement einen Gaseinlaßraum.

Das Vorsehen eines derartigen Gaseinlaßraumes ermöglicht es, ein optimales Einströmen des Gases in das Gehäuse und somit in den Luftsack trotz vom Gehäuse entkoppeltem Gasgenerator zu gewährleisten.

Weitere bevorzugte Ausführungsformen der Erfindung sind in den Unteransprüchen, der Beschreibung sowie der Zeichnung angegeben.

Die Erfindung wird im folgenden beispielhaft unter Bezugnahme auf die Zeichnung beschrieben. Es zeigen:

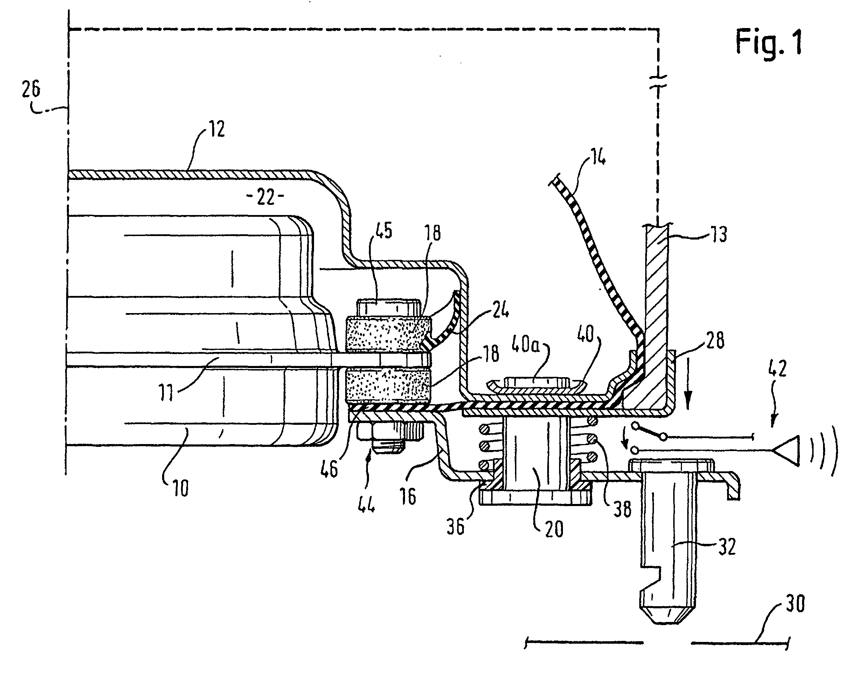

- Fig. 1 bis 3: jeweils teilweise eine Ausführungsform eines erfindungsgemäßen Luftsackmoduls in einer geschnittenen Seitenansicht.

In den Fig. 1 bis 3 ist jeweils der auf einer Seite einer Mittelachse 26 gelegene Teil eines im wesentlichen rotationssymmetrischen Luftsackmoduls gemäß der Erfindung dargestellt.

Gemäß Fig. 1 umfaßt das Luftsackmodul ein Gehäuse für einen zusammengefalteten Luftsack 14, das eine napfartige Grundplatte 12 sowie eine mit der Grundplatte 12 verriegelte, kappenartige Abdeckung 13 aufweist. Zur Sicherung der Abdeckung 13 an der Grundplatte 12 dient ein Haltering 28.

Des weiteren ist ein ringförmiges Basiselement 16 vorgesehen, das über entlang seines äußeren Randbereiches verteilt angeordnete Raststifte 32 mit einer lediglich schematisch angedeuteten Lenkradeinheit 30 eines Fahrzeugs verrastbar ist.

Radial innerhalb der Raststifte 32 weist das Basiselement 16 in Umfangsrichtung verteilt vorgesehene Bohrungen auf, in die Gleitlager 36 eingepaßt sind, in denen Führungszapfen 20 axial geführt sind. Die Gleitlager 36 dienen außerdem als elektrische Isolation zwischen dem Basiselement 16 und der Grundplatte 12. Mittels Gewindestiften 40a und den Führungszapfen 20 werden jeweils ein Sicherungselement 40, die Grundplatte 12, der Luftsack 14 und der Haltering 28 miteinander verbunden, z. B. verschraubt. Zwischen dem Haltering 28 und dem Basiselement 16 sind auf die Führungszapfen 20 gesteckte Schraubenfedern 38 angeordnet, die das Basiselement 16 und den Haltering 28 auseinanderdrücken. Der Führungszapfen 20 weist vorzugsweise einen Kragen auf, der die Vorspannung der Schraubenfeder 38 und die Distanz zwischen Basiselement 16 und Haltering 28 bestimmt. Auf diese Weise ist das Luftsackmodul relativ zum Basiselement 16 und somit zur Lenkradeinheit 30 des Fahrzeugs beweglich.

In der Ausführungsform von Fig. 1 stützen sich die Schraubenfedern 38 nicht direkt an der Grundplatte 12, sondern an dem mit Durchbrüchen für die Führungszapfen 20 versehenen Haltering 28 ab.

Die vorstehend beschriebene Anordnung zur Lagerung der Grundplatte 12 auf dem Basiselement 16 wird auch als elastisches Floating-System bzw. schwimmende Lagerung bezeichnet, bei dem bzw. der die Grundplatte 12 und somit die gesamte Gehäuseeinheit des Luftsackmoduls gewissermaßen lose auf den Schraubenfedern 38 aufliegt. Die Grundplatte 12 und somit die die Grundplatte 12, die Abdeckung 13, den Haltering 28 und den Luftsack 14 umfassende Gehäuse-Baugruppe des erfindungsgemäßen Luftsackmoduls ist daher nicht starr mit dem Basiselement 16 verbunden, sondern mittels des Floating-Systems elastisch federnd gelagert, wobei die Gehäuse-Baugruppe gegen die Rückstellkraft der Schraubenfedern 38 in Richtung des Basiselementes 16 bewegt werden kann.

Die in Fig. 1 nach unten bewegbare Gehäuse-Baugruppe kann dazu verwendet werden, eine Fahrzeughupe 42 zu betätigen, wie es in Fig. 1 schematisch angedeutet ist. Im an der Lenkradeinheit 30 montierten Zustand dient die bewegliche Gehäuse-Baugruppe des erfindungsgemäßen Luftsackmoduls folglich als Betätigungselement der Fahrzeughupe 42, wobei die Stirnseite der Abdeckung 13 als derjenige Bereich des Lenkrades ausgebildet sein kann, den der Fahrer zum Betätigen der Fahrzeughupe 42 beaufschlagt.

Der Gasgenerator 10 ist mit dem inneren Randbereich des Basiselementes 16 über zwei ringförmige elastische Koppelelemente 18 verbunden, die z. B. aus Gummi bestehen. Hierzu ist der Gasgenerator 10 mit einer umlaufenden Haltelasche 11 versehen, die zwischen den beiden Koppelelementen 18 angeordnet ist. An in Umfangsrichtung verteilt angeordneten Klemmstellen werden die Koppelelemente 18 jeweils mittels einer Schraubverbindung 44 derart zusammengedrückt, daß die Haltelasche 11 über ihren gesamten Umfang elastisch zwischen den beiden ringförmigen Koppelelementen 18 eingeklemmt ist. Auf diese Weise ist der Gasgenerator 10 an dem Basiselement 16 aufgehängt. Anstelle ringförmiger Koppelelemente 18 können auch mehrere separate, um die Mittelachse 26 verteilt angeordnete Koppel- oder Zwischenstücke vorgesehen werden.

Grundsätzlich ist es auch möglich, den Gasgenerator 10 ohne das Vorsehen der Koppelelemente 18 oder anderer elastischer Zwischenstücke starr an dem Basiselement 16 zu befestigen. Die Koppel- oder Zwischenelemente können auch schwingungsdämpfend ausgeführt sein. Auf die verschiedenen Möglichkeiten für die Koppelung zwischen dem Gasgenerator 10 und dem Basiselement 16 wird nochmals an anderer Stelle eingegangen.

Die Abmessungen des erfindungsgemäßen Luftsackmoduls sind derart gewählt, daß die Unterseite des Gasgenerators 10 etwa auf einer Höhe mit dem ringförmigen Basiselement 16 liegt.

Zur Abdichtung des Raumes zwischen der Grundplatte 12 und dem Gasgenerator 10 ist eine umlaufende Dichtlippe 24 vorgesehen, die an dem oberen ringförmigen Koppelelement 18 ausgebildet ist und an einem etwa parallel zur Mittelachse 26 verlaufenden Wandabschnitt der Grundplatte 12 abdichtend anliegt. Die Dichtlippe 24 kann jedoch auch separat angebracht werden.

Des weiteren ist zur Abdichtung des Zwischenraumes zwischen der Gehäuse-Baugruppe und dem Gasgenerator 10 der Luftsack 14 zwischen der Abdeckung 13 und einem nach oben gebogenen äußeren Randbereich der Grundplatte 12 hindurch aus dem Gehäuse herausgeführt. Außerhalb des Gehäuses erstreckt sich der Luftsack 14 im wesentlichen senkrecht zur Mittelachse 26 zwischen der Grundplatte 12 und dem Haltering 28 hindurch bis an die Seitenwand des Gasgenerators 10 heran. Der das auch als Luftsackmundstück bezeichnete offene Ende des Luftsacks 14 begrenzende Randbereich 46 des Luftsacks 14 ist zwischen dem Basiselement 16 und dem unteren ringförmigen Koppelelement 18 eingeklemmt. Auf diese Weise wird durch den Luftsack 14 das die Führungszapfen 20 und die Schraubenfedern 38 umfassende elastische Floating-System zur Abstützung der Gehäuse-Baugruppe gegenüber dem Zwischenraum zwischen der Grundplatte 12 und dem Gasgenerator 10 abgedichtet.

Es ist auch möglich, entweder nur die Dichtlippe 24 oder nur den Luftsack 14 zu Abdichtzwecken einzusetzen. Im Fall der Abdichtung lediglich mittels des Luftsacks 14 kann dessen Randbereich 46 auch zwischen dem oberen ringförmigen Koppelelement 18 und einem Schraubenkopf 45 eingeklemmt werden. Alternativ ist es möglich, den Randbereich 46 des Luftsacks 14 direkt mit der Haltelasche 11 und somit dem Gasgenerator 10 zu verbinden, um die gewünschte Abdichtung zu erzielen.

Durch die Dichtlippe 24 bzw. den Luftsack 14, die Grundplatte 12 und den Gasgenerator 10 wird folglich ein Gaseinlaßraum 22 begrenzt, in den in einem Crashfall nach Auslösen des Gasgenerators 10 das von diesem ausgestoßene Gas strömen kann, ohne in die Umgebung zu entweichen. Die Grundplatte 12 ist mit nicht dargestellten Gaseinlaßöffnungen versehen, deren Anzahl, Ausgestaltung sowie Anordnung derart gewählt ist, daß pro Zeiteinheit die gewünschte Gasmenge in der gewünschten Weise über die Grundplatte 12 verteilt mit der jeweils erforderlichen Strömungsgeschwindigkeit in das Gehäuse strömt, um den zusammengefalteten Luftsack 14 aufzublasen. Die Grundplatte 12 des erfindungsgemäßen Luftsackmoduls dient somit als ein optimales Aufblasen des Luftsacks 14 gewährleistender Diffusor.

Durch das Vorsehen der ringförmigen Koppelelemente 18 kann kein Gas zwischen dem Gasgenerator 10 und dem radial inneren Rand des Basiselementes 16 hindurch entweichen. Alternativ zu der Ausführungsform von Fig. 1 können zum Einklemmen der Haltelasche 11 des Gasgenerators 10 auch mehrere jeweils zweiteilige Koppelelemente vorgesehen werden, die jeweils im Bereich der Schraubverbindungen 44 angeordnet werden. Um auch in diesem Fall für die erforderliche Gasdichtigkeit zu sorgen, kann das Basiselement 16 in dem Bereich zwischen dem Floating-System, d. h. den Führungszapfen 20, und dem radial inneren Rand mit einem umlaufenden Abdichtelement z. B. in Form eines O-Ringes versehen sein, der bei der Montage im Fahrzeug abdichtend gegen die Lenkradeinheit 30 gedrückt wird. Ein unterhalb des Gasgenerators 10 vorhandener und mittels des O-Ringes gegenüber der Umgebung abgedichteter Raum der Lenkradeinheit 30 ist dann strömungstechnisch mit den Gaseinlaßraum 22 verbunden. Eine weitere alternative Ausgestaltungsmöglichkeit besteht darin, anstelle des ringförmigen Basiselementes 16 ein geschlossenes plattenförmiges Basiselement ohne zentrale Öffnung für den Gasgenerator 10 vorzusehen, um den Bereich unterhalb des Gasgenerators 10 abzudichten.

Während des Betriebs des Fahrzeugs auftretende Schwingungen oder Vibrationen des Basiselementes 16 werden über die die Haltelasche 11 einklemmenden Koppelelemente 18 auf den Gasgenerator 10 gedämpft übertragen, d.h. in den Koppelelementen 18 wird Energie dissipiert. Wegen der vergleichsweise großen Masse des Gasgenerators 10 werden die Schwingungen von dem Fahrer am Lenkrad nicht gespürt.

Aufgrund der Entkoppelung des Gasgenerators 10 von der Gehäuse-Baugruppe erfolgt die Absorption der Schwingungs- bzw. Vibrationsenergie ohne Beeinflussung anderer Bauteile des Luftsackmoduls. Insbesondere werden Schwingungen nicht durch die Schraubenfedern 38 übertragen, sondern von der im wesentlichen die Grundplatte 12, den Haltering 28 und die Abdeckung 13 umfassenden Gehäuse-Einheit ferngehalten, so daß vergleichsweise weiche Schraubenfedern 38 mit einer relativ kleinen Federkonstante verwendet werden können. Die zum Betätigen der Fahrzeughupe durch Niederdrücken der Gehäuse-Einheit vom Fahrer aufzubringende Kraft ist folglich relativ klein, und es besteht trotzdem nicht die Gefahr, daß während des Fahrzeugbetriebs auftretende Schwingungen die Gehäuse-Einheit in Bewegung versetzen und zu unbeabsichtigten Betätigungen der Fahrzeughupe 42 führen.

Die zur Abdichtung des Gaseinlaßraumes 22 vorgesehene Dichtlippe 24, die an der Grundplatte 12 des Gehäuses anliegt, ist derart ausgeführt, daß die Entkoppelung von Gehäuse und Gasgenerator 10 nicht beeinträchtigt und die Funktion des Gasgenerators 10 als Schwingungsdämpfer nicht gestört wird. Die Ausgestaltung der Koppelelemente 18, insbesondere deren Material und Form, wird in Abhängigkeit von den jeweiligen Umständen und insbesondere von den die auftretenden Schwingungen bestimmenden Parametern wie z. B. Energieniveau, Frequenz etc. gewählt.

Wesentliche Vorteile des erfindungsgemäßen Luftsackmoduls bestehen somit darin, daß die Masse der zum Betätigen des Hupsystems vom Fahrer zu beaufschlagenden Baugruppe reduziert wird, daß Schwingungen des Lenkrades durch Verwendung des Gasgenerators 10 als schwingungsdämpfende Masse vermieden werden, daß die Gefahr von unbeabsichtigten Betätigungen der Fahrzeughupe aufgrund von Schwingungen beseitigt ist, und daß auf eine zusätzlich zu dem Luftsackmodul vorgesehene Dämpfungsmasse verzichtet werden kann.

In der Ausführungsform von Fig. 1 erfolgt die Befestigung des Basiselementes 16 an der Lenkradeinheit 30 durch die Raststifte 32. Es ist jedoch alternativ auch möglich, das Basiselement 16 als einen integralen Bestandteil der Lenkradeinheit 30 des Fahrzeugs vorzusehen und den Gasgenerator 10 somit direkt beispielsweise über den Schraubverbindungen 44 entsprechende Befestigungselemente an der Lenkradeinheit 30 zu fixieren.

Die im folgenden beschriebenen Ausführungsformen des erfindungsgemäßen Luftsackmoduls unterscheiden sich von der Ausführungsform von Fig. 1 im wesentlichen durch die Art der Abdichtung des von der Grundplatte 12 und dem Gasgenerator 10 begrenzten Gaseinlaßraumes 22, stimmen jedoch bezüglich der prinzipiellen Funktionsweise und der vorteilhaften Wirkungen mit der Ausführungsform von Fig. 1 überein.

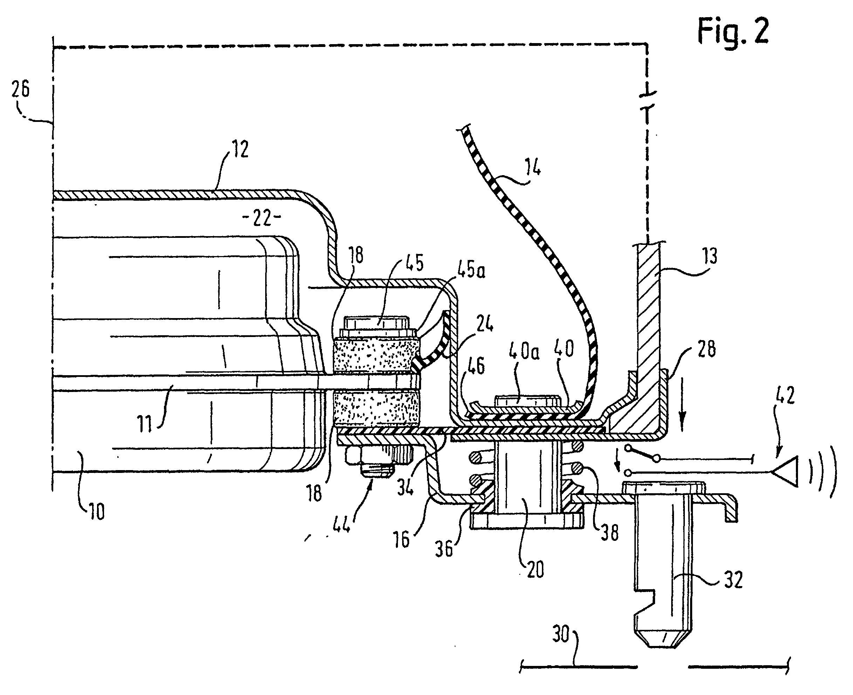

Gemäß Fig. 2 ist der Luftsack 14 nicht aus dem Gehäuse herausgeführt, sondern mit seinem das Luftsackmundstück begrenzenden Randbereich 46 zwischen den mit den Führungszapfen 20 verbundenen Sicherungselementen 40 und der Grundplatte 12 eingeklemmt.

In der Ausführungsform von Fig. 2 ist ein separates Dichtelement 34 vorgesehen, das ringförmig ausgebildet und mit seinem radial äußeren Randbereich zwischen dem Haltering 28 und der Grundplatte 12 und mit seinem radial inneren Randbereich zwischen dem unteren ringförmigen Koppelelement 18 und dem Basiselement 16 eingeklemmt ist. Auf die an das obere ringförmige Koppelelement 18 angeformte Dichtlippe 24 kann auch in dieser Ausführungsform grundsätzlich verzichtet werden.

Der radial innere Randbereich des Dichtelementes 34 kann auch an einer anderen Stelle befestigt werden, und zwar beispielsweise zwischen dem Schraubenkopf 45 bzw. einer Beilagscheibe 45a und dem oberen ringförmigen Koppelelement 18. Das Dichtelement 34 kann auch direkt mit dem Gasgenerator 10, beispielsweise mit dessen Haltelasche 11, verbunden werden.

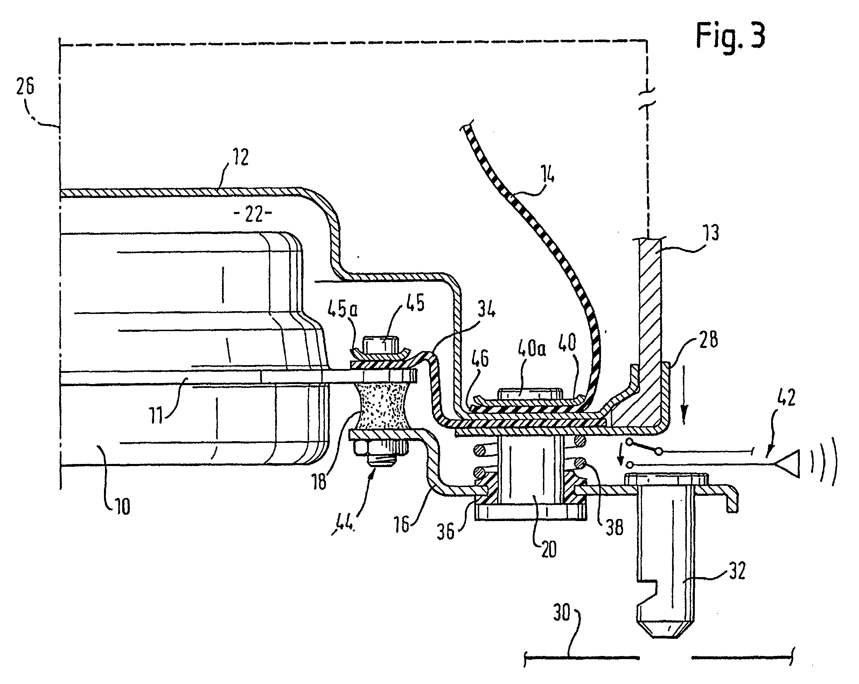

In der Ausführungsform von Fig. 3 ist zur Abdichtung des Gaseinlaßraumes 22 wiederum ein separates Dichtelement 34 vorgesehen, das mit seinem radial äußeren Randbereich zwischen dem Haltering 28 und der Grundplatte 12 und mit seinem radial inneren Randbereich zwischen der Haltelasche 11 des Gasgenerators und einer Beilagscheibe 45a der Schraubverbindung 44 eingeklemmt ist.

Im Unterschied zu den vorstehend beschriebenen Ausführungsformen erfolgt gemäß Fig. 3 die Koppelung des Gasgenerators 10 an das Basiselement 16 durch ein einteiliges ringförmiges elastisches Koppelelement 18, das mittels der Schraubverbindung 44 zwischen der Haltelasche 11 und dem Basiselement 16 eingespannt ist.

In den vorstehend beschriebenen Ausführungsformen erfolgt die Koppelung zwischen Gasgenerator 10 und Basiselement 16 jeweils durch ein oder mehrere elastische Koppelelemente 18.

Grundsätzlich könnte aber auch eine starre Koppelung des Gasgenerators 10 an der Lenkradeinheit 30 bzw. am Basiselement 16 vorgesehen sein. Auch in dieser Variante können die Schraubenfedern 38 schwächer ausgeführt werden als es ohne die erfindungsgemäße unabhängige Bewegbarkeit von Gehäuse 12, 13 und Gasgenerator 10 möglich wäre. Die Erfindung eröffnet somit die Möglichkeit eines sensitiveren Hupens, da die vergleichsweise große Masse des Gasgenerators 10 bei der Betätigung der Hupe 42 über das Gehäuse 12, 13 nicht mitbewegt zu werden braucht.

Eine weitere Möglichkeit bestünde in einer rein elastischen Ankoppelung des Gasgenerators 10 an das Basiselement 16 bzw. die Lenkradeinheit 30.

Die Schwingungen des Gasgenerators 10 würden dann ungedämpft erfolgen, was bei bestimmten Frequenzen dazu führen kann, daß der Gasgenerator zu stark und die übrige Lenkradeinheit nicht schwingt. Dennoch weist auch diese Variante grundsätzlich die vorstehend erwähnten Vorteile der Erfindung auf.

Besonders bevorzugt ist eine elastische Ankoppelung des Gasgenerators 10 an das Basiselement 16 bzw. an die Lenkradeinheit 30 über ein oder mehrere schwingungsdämpfende Koppelelemente, so daß Schwingungsenergie in den Koppelelementen z. B. durch Reibung dissipiert wird. Vorzugsweise wird eine elastische Ankoppelung mit einer leichten Dämpfung gewählt, die derart ausgelegt ist, daß Resonanzerscheinungen vermieden werden oder Schwingungen der Lenkradeinheit 30 bzw. Lenksäule und des Gasgenerators 10 sich gegenseitig aufheben. Die konkrete Ausgestaltung der Koppelelemente und somit die Art und Weise sowie der Grad ihrer Fähigkeit zur Schwingungsabsorption wird in Abhängigkeit von den jeweiligen Anforderungen gewählt. Die Koppelelemente können z. B. aus Gummi oder textilem Material oder auch aus einem Verbundmaterial hergestellt sein.

### Bezugszeichenliste

- 10: Gasgenerator
- 11: Haltelasche
- 12: Grundplatte
- 13: Abdeckung
- 14: Luftsack
- 16: Basiselement
- 18: Koppelelemente
- 20: Führungszapfen
- 22: Gaseinlaßraum
- 24: Dichtlippe
- 26: Mittelachse
- 28: Haltering
- 30: Lenkradeinheit
- 32: Raststift
- 34: Dichtelement
- 36: Gleitlager
- 38: Schraubenfeder
- 40: Sicherungselement
- 40a: Gewindestift
- 42: Fahrzeughupe
- 44: Schraubverbindung
- 45: Schraubenkopf
- 45a: Beilagscheibe
- 46: Randbereich des Luftsacks

## Patentansprüche

1. Luftsackmodul für Kraftfahrzeuge mit einem Gehäuse (12, 13) für einen aufblasbaren Luftsack (14) und einem Gasgenerator (10), wobei der Gasgenerator (10) und das Gehäuse (12, 13) unabhängig voneinander bewegbar sind, **dadurch gekennzeichnet,**
**daß** der Gasgenerator (10) mit einem Basiselement (16) verbunden ist, das am Kraftfahrzeug befestigbar ist wobei das Gehäuse (12, 13) gegen eine Rückstellkraft in Richtung des Basiselementes (16) bewegbar ist.

2. Luftsackmodul nach Anspruch 1,
**dadurch gekennzeichnet,**
**daß** der Gasgenerator (10) als Schwingungsdämpfer dient.

3. Luftsackmodul nach Anspruch 1 oder 2,
**dadurch gekennzeichnet,**
**daß** zur Verbindung des Gasgenerators (10) mit dem Basiselement (16) wenigstens ein bevorzugt elastisches und/oder schwingungsdämpfendes Koppelelement (18) vorgesehen ist.

4. Luftsackmodul nach zumindest einem der vorhergehenden Ansprüche,
**dadurch gekennzeichnet,**
**daß** der Gasgenerator (10) mit dem Basiselement (16) schwingungsgedämpft gekoppelt ist.

5. Luftsackmodul nach zumindest einem der vorhergehenden Ansprüche,
**dadurch gekennzeichnet,**
**daß** das Gehäuse (12, 13) an dem Basiselement (16) abgestützt und insbesondere federnd gelagert ist.

6. Luftsackmodul nach zumindest einem der vorhergehenden Ansprüche,
**dadurch gekennzeichnet,**
**daß** das Gehäuse (12, 13) entlang zumindest einem mit dem Basiselement (16) verbundenen Führungszapfen (20) verschiebbar ist.

7. Luftsackmodul nach zumindest einem der vorhergehenden Ansprüche,
**dadurch gekennzeichnet,**
**daß** es Bestandteil eines kombinierten Airbag- und Hupsystems (10, 12, 13, 30, 42) ist.

8. Luftsackmodul nach zumindest einem der vorhergehenden Ansprüche,
**dadurch gekennzeichnet,**
**daß** durch Bewegen des Gehäuses (12, 13) relativ zu dem Basiselement (16) eine Fahrzeughupe (42) betätigbar ist.

9. Luftsackmodul nach zumindest einem der vorhergehenden Ansprüche,
**dadurch gekennzeichnet,**
**daß** wenigstens eine Wand (12) des Gehäuses (12, 13) als Gaseinlaß ausgebildet ist.

10. Luftsackmodul nach zumindest einem der vorhergehenden Ansprüche,
**dadurch gekennzeichnet,**
**daß** der Gasgenerator (10) zumindest bereichsweise von einer als Gaseinlaß ausgebildeten Gehäusewand (12) umgeben ist.

11. Luftsackmodul nach Anspruch 9 oder 10,
**dadurch gekennzeichnet,**
**daß** der Gaseinlaß als Diffusor ausgebildet ist.

12. Luftsackmodul nach zumindest einem der vorhergehenden Ansprüche,
**dadurch gekennzeichnet,**
**daß** der Gasgenerator (10), eine als Gaseinlaß ausgebildete Wand. (12) des Gehäuses (12, 13) und wenigstens ein Abdichtelement (14, 18, 24, 34) einen Gaseinlaßraum (22) begrenzen.

13. Luftsackmodul nach zumindest einem der vorhergehenden Ansprüche,
**dadurch gekennzeichnet,**
**daß** zur Abdichtung eines Gaseinlaßraumes (22) der Gasgenerator (10) und/oder das Basiselement (16) mit zumindest einer Dichtung, vorzugsweise einer Dichtlippe (24) versehen sind.

14. Luftsackmodul nach zumindest einem der vorhergehenden Ansprüche,
**dadurch gekennzeichnet,**
**daß** zur Abdichtung des Gaseinlaßraumes (22) der Luftsack (14) aus dem Gehäuse (12, 13) herausgeführt und insbesondere mit seinem das Luftsackmundstück begrenzenden Randbereich (46) mit dem Gasgenerator (10) oder mit dem Basiselement (16) verbunden ist.

15. Luftsackmodul nach zumindest einem der vorhergehenden Ansprüche,
**dadurch gekennzeichnet,**
**daß** zur Abdichtung eines Gaseinlaßraumes (22) ein separates Dichtelement (34) zwischen dem Gasgenerator (10) und dem Gehäuse (12, 13) oder zwischen dem Basiselement (16) und dem Gehäuse (12, 13) angeordnet ist.

16. Luftsackmodul nach zumindest einem der vorhergehenden Ansprüche,
**dadurch gekennzeichnet,**
**daß** zur Verbindung des Gasgenerators (10) mit dem Basiselement (16) vorgesehene Elemente (18) gleichzeitig zur Abdichtung eines Gaseinlaßraumes (22) ausgebildet sind.

17. Luftsackmodul nach zumindest einem der vorhergehenden Ansprüche,
**dadurch gekennzeichnet,**
**daß** das Basiselement (16) Bestandteil einer Lenkeinheit, vorzugsweise einer Lenkradeinheit (30) ist.

## Claims

1. Airbag module for motor vehicles comprising a housing (12, 13) for an inflatable airbag (14) and a gas generator (10), with the gas generator (10) and the housing (12, 13) being movable independently of one another, **characterized in that**
the gas generator (10) is connected to a base element (16) which can be secured to the motor vehicle, with the housing (12, 13) being movable in the direction of the base element (16) against a restoring force.

2. Airbag module in accordance with claim 1, **characterized in that** the gas generator (10) serves as an oscillation damper.

3. Airbag module in accordance with claim 1 or claim 2, **characterized in that** at least one coupling element (18), preferably elastic and/or oscillation damping, is provided for connecting the gas generator (10) to the base element (16).

4. Airbag module in accordance with at least one of the preceding claims, **characterized in that** the gas generator (10) is coupled to the base element (16) in an oscillation damping manner.

5. Airbag module in accordance with at least one of the preceding claims, **characterized in that** the housing (12, 13) is supported by and is in particular resiliently seated on the base element (16).

6. Airbag module in accordance with at least one of the preceding claims, **characterized in that** the housing (12, 13) is displaceable along at least one guide spigot (20) connected to the base element (16).

7. Airbag module in accordance with at least one of the preceding claims, **characterized in that** it is a constituent of a combined airbag and horn system (10, 12, 13, 30, 42).

8. Airbag module in accordance with at least one of the preceding claims, **characterized in that** a vehicle horn (42) can be actuated by moving the housing (12, 13) relative to the base element (16).

9. Airbag module in accordance with at least one of the preceding claims, **characterized in that** at least one wall (12) of the housing (12, 13) is designed as a gas inlet.

10. Airbag module in accordance with at least one of the preceding claims, **characterized in that** the gas generator (10) is surrounded at least region-wise by a housing wall (12) which is designed as a gas inlet.

11. Airbag module in accordance with claim 9 or claim 10, **characterized in that** the gas inlet is designed as a diffuser.

12. Airbag module in accordance with at least one of the preceding claims, **characterized in that** the gas generator (10), a wall (12) of the housing (12, 13) designed as a gas inlet, and at least one sealing element (14, 18, 24, 34) bound a gas inlet space (22).

13. Airbag module in accordance with at least one of the preceding claims, **characterized in that** the gas generator (10) and/or the base element (16) are provided with at least one seal, preferably a sealing lip (24), for sealing a gas inlet space (22).

14. Airbag module in accordance with at least one of the preceding claims, **characterized in that**, for sealing the gas inlet space (22), the airbag (14) is led out of the housing (12, 13) and is connected, in particular at its edge region (46) bordering the mouthpiece of the airbag, to the gas generator (10) or to the base element (16).

15. Airbag module in accordance with at least one of the preceding claims, **characterized in that**, for sealing a gas inlet space (22), a separate sealing element (34) is arranged between the gas generator (10) and the housing (12, 13) or between the base element (16) and the housing (12, 13).

16. Airbag module in accordance with at least one of the preceding claims, **characterized in that** elements (18) provided for connecting the gas generator (10) to the base element (16), are at the same time designed for sealing a gas inlet space (22).

17. Airbag module in accordance with at least one of the preceding claims, **characterized in that** the base element (16) is a constituent of a steering unit, preferably of a steering wheel unit (30).

## Revendications

1. Module de coussin de sécurité gonflable pour véhicules automobiles comprenant un boîtier (12, 13) pour un coussin gonflable (14) et un générateur de gaz (10), le générateur de gaz (10) et le boîtier (12, 13) étant mobiles indépendamment l'un de l'autre, **caractérisé en ce que** le générateur de gaz (10) est relié à un élément de base (16), qui est destiné à être fixé contre le véhicule automobile, le boîtier (12, 13) étant mobile en direction de l'élément de base (16) à l'encontre d'une force de rappel.

2. Module de coussin de sécurité gonflable selon la revendication 1, **caractérisé en ce que** le générateur de gaz (10) fait fonction d'amortisseur de vibrations.

3. Module de coussin de sécurité gonflable selon la revendication 1 ou 2, **caractérisé en ce que**, pour relier le générateur de gaz (10) à l'élément de base (16), il est prévu au moins un élément de couplage (18) de préférence élastique et/ou amortissant les vibrations.

4. Module de coussin de sécurité gonflable selon au moins l'une des revendications précédentes, **caractérisé en ce que** le générateur de gaz (10) est couplé à l'élément de base (16) de manière à amortir les vibrations.

5. Module de coussin de sécurité gonflable selon au moins l'une des revendications précédentes, **caractérisé en ce que** le boîtier (12, 13) est en appui contre l'élément de base (16) et, en particulier, est logé sur ressort.

6. Module de coussin de sécurité gonflable selon au moins l'une des revendications précédentes, **caractérisé en ce que** le boîtier (12, 13) est mobile le long d'au moins un tourillon de guidage (20) assemblé avec l'élément de base (16).

7. Module de coussin de sécurité gonflable selon au moins l'une des revendications précédentes, **caractérisé en ce qu'**il fait partie intégrante d'un système combiné de coussin de sécurité et klaxon (10,12,13, 30,42).

8. Module de coussin de sécurité gonflable selon au moins l'une des revendications précédentes, **caractérisé en ce qu'**un klaxon (42) du véhicule peut être actionné par un mouvement du boîtier (12, 13) par rapport à l'élément de base (16).

9. Module de coussin de sécurité gonflable selon au moins l'une des revendications précédentes, **caractérisé en ce qu'**au moins une paroi (12) du boîtier (12, 13) est conçue sous forme de système d'admission du gaz.

10. Module de coussin de sécurité gonflable selon au moins l'une des revendications précédentes, **caractérisé en ce que** le générateur de gaz (10) est entouré au moins par tronçon d'une paroi du boîtier (12) conçue sous forme de système d'admission du gaz.

11. Module de coussin de sécurité gonflable selon la revendication 9 ou 10, **caractérisé en ce que** le système d'admission du gaz est conçu sous forme de diffuseur.

12. Module de coussin de sécurité gonflable selon au moins l'une des revendications précédentes, **caractérisé en ce que** le générateur de gaz (10), une paroi (12) du boîtier (12, 13), conçue sous forme de système d'admission du gaz, et au moins un élément d'étanchéité (14, 18, 24, 34) délimitent un compartiment d'admission du gaz (22).

13. Module de coussin de sécurité gonflable selon au moins l'une des revendications précédentes, **caractérisé en ce que**, pour assurer l'étanchéité d'un compartiment d'admission du gaz (22), le générateur de gaz (10) et/ou l'élément de base (16) comportent au moins une garniture d'étanchéité, de préférence une lèvre d'étanchéité (24).

14. Module de coussin de sécurité gonflable selon au moins l'une des revendications précédentes, **caractérisé en ce que**, pour assurer l'étanchéité d'un compartiment d'admission du gaz (22), le coussin de sécurité gonflable (14) est guidé hors du boîtier (12, 13) et est assemblé, en particulier par sa zone de bordure (46) délimitant le bec du coussin de sécurité gonflable, avec le générateur de gaz (10) ou avec l'élément de base (16).

15. Module de coussin de sécurité gonflable selon au moins l'une des revendications précédentes, **caractérisé en ce que**, pour assurer l'étanchéité d'un compartiment d'admission du gaz (22), un élément d'étanchéité (34) séparé est agencé entre le générateur de gaz (10) et le boîtier (12, 13) ou entre l'élément de base (16) et le boîtier (12, 13).

16. Module de coussin de sécurité gonflable selon au moins l'une des revendications précédentes, **caractérisé en ce que** des éléments (18) prévus pour l'assemblage du générateur de gaz (10) avec l'élément de base (16) sont en même temps conçus pour assurer l'étanchéité d'un compartiment d'admission du gaz (22).

17. Module de coussin de sécurité gonflable selon au moins l'une des revendications précédentes, **caractérisé en ce que** l'élément de base (16) fait partie intégrante d'une unité de direction, de préférence une unité de volant (30).
